# EUROPÄISCHE PATENTSCHRIFT

(11) **EP 4 517 460 B1**
(45) Veröffentlichungstag und Bekanntmachung des Hinweises auf die Patenterteilung: **15.10.2025**
(21) Anmeldenummer: 23193968.7
(22) Anmeldetag: 29.08.2023
(51) Int. Cl.: G05B 23/02, G06F 17/40, G05B 19/418

(54) **SYSTEM UMFASSEND ZUMINDEST ZWEI VERPACKUNGSANLAGEN ZUM VERPACKEN VON SCHÜTTFÄHIGEN PRODUKTEN IN SÄCKE ODER BEUTEL SOWIE EIN ENTSPRECHENDES VERFAHREN**
SYSTEM COMPRISING AT LEAST TWO PACKAGING SYSTEMS FOR PACKAGING POURABLE PRODUCTS INTO SACKS OR BAGS, AND A CORRESPONDING METHOD
SYSTÈME COMPRENANT AU MOINS DEUX INSTALLATIONS D'EMBALLAGE POUR EMBALLER DES PRODUITS COULANTS DANS DES SACS OU DES SACS ET PROCÉDÉ CORRESPONDANT

(43) Veröffentlichungstag der Anmeldung: 05.03.2025
(73) Patentinhaber: BEUMER Group GmbH & Co. KG, 59269 Beckum (DE)
(72) Erfinder: Tellen, Marc, 48291 Telgte (DE)
(74) Vertreter: Novagraaf Group

(56) Entgegenhaltungen:
- WO-A1-2015/078494
- DE-A1- 102008 020 381

## Beschreibung

Die Erfindung betrifft ein System umfassend zumindest zwei Verpackungsanlagen zum Verpacken von schüttfähigen Produkten in Säcke oder Beutel sowie ein entsprechendes Verfahren.

Eine Verpackungsanlage zum Verpacken eines Produkts in eine Mehrzahl von Säcken oder Beuteln umfasst üblicherweise mehrere Maschinentypen beziehungsweise Vorrichtungen, welche zum Bilden einer Verpackungslinie miteinander gekoppelt sein können. Es kann vorgesehen sein, dass jeder Maschinentyp innerhalb der Verpackungslinie mindestens einmal vorhanden ist. Beispielsweise kann eine Verpackungslinie eine Absackvorrichtung zum Absacken eines schüttfähigen Produkts in Beutel oder Säcke aufweisen. Ferner kann ein Palettierer vorgesehen sein, an welchem die gefüllten Säcke oder Beutel zu gestapelten Lagen zusammengefasst und palettiert werden. Außerdem kann eine Ladungssicherungsvorrichtung vorgesehen sein, an welcher die auf der Palette gestapelten Säcke mittels eines Kunststofffolienüberzugs gesichert werden.

Betreiber derartiger Verpackungsanlagen streben kontinuierlich danach, ihre Verpackungsanlage hinsichtlich Effizienz, Energieverbrauch, Ausfallzeiten, Produktqualität etc. zu optimieren. Bisher ist jeder Betreiber jedoch darauf angewiesen, das Betriebsverhalten seiner Maschinen selbst zu analysieren und die Einstellungen seiner Maschinen entsprechend selbst zu optimieren. Ob es für identische oder vergleichbare Maschinen andere Einstellungen der Betriebsparameter gibt, die zu besseren Ergebnissen bei den o.g. Zielen führen würden, erfährt beispielsweise Betreiber A nicht, beziehungsweise hat Betreiber A keinen Zugriff auf derartige Daten. Denn identische oder vergleichbaren Maschinen werden im Normalfall bei anderen Betreibern (Betreiber B, Betreiber C, usw.) betrieben, auf deren Betriebsparameter Betreiber A keinen Zugriff hat.

DE 10 2008 020 381 A1 offenbart ein Verfahren zur Anlagenoptimierung mittels gesammelter Daten.

Es ist daher Aufgabe der Erfindung, ein System umfassend mehrere Verpackungsanlagen und ein entsprechendes Verfahren bereitzustellen, mittels welchem das Optimieren von Betriebsparametern der Verpackungsanlagen bzw. einzelner darin enthaltener Maschinen vereinfacht wird.

Die Aufgabe wird gelöst mit den Merkmalen der unabhängigen Ansprüche. Die abhängigen Ansprüche betreffen jeweils vorteilhafte Ausgestaltungen der Erfindung.

Demgemäß wird ein System nach Anspruch 1 vorgeschlagen.

Durch die Erfindung wird ein Kundennetzwerk für die Änderung / Optimierung von Betriebsparametern von mindestens einer der vorhandenen Maschine der Verpackungsanlage zur Verfügung bereitgestellt.

Die Verpackungsprozessinformationen können nicht nur über Sensoren erfasst werden, sondern auch über eine Bedien- und Informationseinheit an der Vorrichtung durch einen Bediener eingegeben werden. Als Bedien- und Informationseinheit können beispielsweise ein HMI (=human machine interface), ein mobiles Endgerät wie Laptop, Smartphone, Tablet, augmented reality headsets, virtual reality headsets, smart watches, etc., oder ein Online-Portal irgendwo auf der Welt eingesetzt werden. Die Bedien- und Informationseinheit ermöglicht dem Bediener sowohl das Anzeigen, Filtern und/oder Sortieren von Verpackungsprozessinformationen als auch das Eingeben von Verpackungsprozessinformationen.

Eine Verpackungsanlage kann mindestens eine Bedien- und Informationseinheit aufweisen. Bevorzugt kann jede Vorrichtung der Verpackungsanlage eine separate Bedien- und Informationseinheit aufweisen. Es kann vorgesehen sein, dass die Bedien-und Informationseinheit zur drahtlosen oder drahtgebundenen Kommunikation mit der Steuereinrichtung der jeweiligen Vorrichtung und/oder zur drahtlosen oder drahtgebundenen Kommunikation mit der Speichereinrichtung eingerichtet ist. Es kann vorgesehen sein, dass die Bedien- und Informationseinheit dazu eingerichtet ist, dass die gesammelten Verpackungsprozessinformationen an die gemeinsame Speichereinrichtung übersendet werden. Ferner kann die Bedien- und Informationseinheit dazu eingerichtet sein, Auswertungsinformationen nach erfolgter Freigabe durch einen Bediener oder direkt ohne Freigabe zu empfangen und an die Steuereinrichtung zu übersenden.

Im Folgenden werden die Begriffe Kunde und Betreiber synonym verwendet.

Es kann vorgesehen sein, dass mindestens zwei Verpackungsanlagenbetreiber ein Netzwerk bilden, die gleiche oder vergleichbare Maschinen einer Verpackungsanlage betreiben. Mit anderen Worten kann Betreiber A mindestens eine Verpackungsanlage A betreiben und Betreiber B kann mindestens eine Verpackungsanlage B betreiben. Ein Betreiber kann Teil des Netzwerks sein, wenn er mindestens jeweils einen der drei Maschinentypen Absackvorrichtung, Palettiervorrichtung und/oder Ladungssicherungsvorrichtung für eine Verpackungsanlage einsetzt. Es ist auch möglich, dass ein Betreiber nur einen einzigen Maschinentyp, oder zwei verschiedene Maschinentypen oder eine Anordnung von mehreren Maschinen desselben Maschinentyps einsetzt. Bei den einzelnen Maschinen kann es sich um Maschinen desselben Herstellers oder um Maschinen unterschiedlicher Hersteller handeln.

Die Verpackungsanlage weist eine oder mehrere Absackvorrichtungen auf. In dieser wird das Produkt, welches beispielsweise in einem Silo vorgehalten sein kann, in einzelne Säcke oder Beutel abgesackt. Derartige Vorrichtungen werden Form-, Füll- und Schließmaschinen (FFS-Maschinen) genannt, da aus schlauchförmigem Material einzelne, oben offene Säcke erzeugt werden, die in der Vorrichtung mit dem Produkt befüllt und anschließend am oberen, offenen Ende verschlossen werden. Alternativ kann es sich bei der Absackvorrichtung auch um eine rotierende Packmaschine oder eine Reihenpackmaschine handeln, die ein Produkt in Säcke oder Beutel absackt.

Die Verpackungsanlage weist einen oder mehrere Palettierer auf. Ein Palettierer ist eine Vorrichtung zum Palettieren einer Mehrzahl von mit dem Produkt befüllten Säcken oder Beuteln, wobei mehrere, in der Regel nacheinander zugeführte Säcke zu einer Lage zusammengefasst werden. Mehrere solcher Lagen werden sukzessive auf einer Palette aufgeschichtet, bis eine gewünschte Stapelhöhe des Stückgutstapels erreicht ist. Alternativ kann es sich bei dem Palettierer auch um einen Palettierroboter handeln.

Die Verpackungsanlage weist darüber hinaus eine oder mehrere Ladungssicherungsvorrichtungen auf, zum Beispiel eine Haubenstretchvorrichtung und/oder Palettensicherungsvorrichtung. Die Ladungssicherungsvorrichtung dient zum Sichern von mit Säcken beladenen Paletten, wobei die mit Säcken beladene Palette, also der Stückgutstapel, mit einem Kunststofffolienüberzug (Stretchhaube) versehen oder mit einer Folie, insbesondere einer Stretchfolie, umwickelt werden kann (Wickelstretchvorrichtung). Ein derart gesicherter Stückgutstapel auf einer Palette ist in diesem Zustand in der Regel transportfähig.

Die gemeinsame Speichereinrichtung kann ein Netzwerk bzw. eine Cloud sein, auf die beispielsweise unterschiedliche Betreiber oder unterschiedliche Standorte desselben Betreibers Zugriff haben. Dabei kann jeder beteiligte Betreiber seine Verpackungsprozessinformationen wie Betriebsparameter, Daten von Sensoren (bspw. Vibrationssensoren, Temperatursensoren, Akustiksensoren, bildgebende Sensoren, Strommessgeräte etc.) anonymisiert an die Cloud senden. Es kann vorgesehen sein, dass die übermittelten Verpackungsprozessinformationen von jedem an dem Netzwerk beteiligten anderen Betreiber oder Standort angefragt und bei Bedarf über das Internet für die eigene Verpackungsanlege bzw. Vorrichtung heruntergeladen und verwendet werden kann. Dazu kann vorgesehen sein, dass alle Maschinen bzw. alle Vorrichtungen einer Verpackungslinie eines Betreibers über Datenleitungen untereinander verbunden sind. Ferner kann jede Verpackungsanlage oder Vorrichtung zumindest temporär mit der Cloud oder dem gemeinsamen Server verbunden werden, beispielsweise über ein IoT Gateway (IoT = Internet of Things) oder über einen WLAN AccessPoint. Das bedeutet beispielsweise, dass Betreiber A die Betriebsparameter Packmuster,

Geschwindigkeit der Abschieber und Anzahl der palettierten Stückgutstapel pro Stunde für Produkt A für Palettierer A an die Cloud sendet. Betreiber B möchte mit Palettierer B dasselbe Produkt A verpacken und sucht nach einer Leistungsoptimierung für seine Betriebsparameter. Die Leistungsoptimierung ist in diesem Fall das vorgebbare Kriterium für eine Änderung der Betriebsparameter. Betreiber B sendet ebenfalls die Betriebsparameter Packmuster, Geschwindigkeit der Abschieber und Anzahl der palettierten Stückgutstapel pro Stunde an die Cloud. Betreiber B erhält als Empfehlung die Daten von Betreiber A, sofern Betreiber A für Produkt A mit seinen Betriebsparametern eine bessere Leistung erzielt als Betreiber B mit seinen Betriebsparametern. Diese Daten werden für Betreiber B über das Internet an Palettierer B gesendet.

Die gemeinsame Speichereinrichtung bzw. Cloud im Rahmen der Erfindung kann ein von der Vorrichtung / Verpackungsanlage entfernter Server sein, der Daten speichern kann. Bei den Daten kann es sich um jede für den Verpackungsprozess relevante Information handeln. Es ist denkbar, dass neben den Verpackungsprozessinformationen Text- oder Spracheingaben an die Speichereinrichtung übermittelt werden können, in denen Teilnehmer des Netzwerks Anfragen, Probleme und/oder deren Lösungen mitteilen können. Das Netzwerk kann beliebig viele Teilnehmer bzw. Betreiber mit Verpackungsanlagen umfassen.

Es kann vorgesehen sein, dass Betreiber mit ähnlichen Problemen nach Freigabe der jeweiligen Betreiber miteinander in Kontakt treten können (z.B. über Telefon, Mail, Besuch, etc.), um direkt über das Problem diskutieren zu können.

Die Steuereinrichtung kann die gesammelten Verpackungsprozessinformationen direkt oder indirekt an die Speichereinrichtung übersenden. Indirekt kann bedeuten, dass die Steuereinrichtung die gesammelten Verpackungsprozessinformationen zunächst an einen Leitrechner außerhalb oder innerhalb der Vorrichtung übersendet. Dieser Leitrechner kann dann die Verpackungsprozessinformationen an die Speichereinrichtung übergeben.

Die Steuereinrichtung kann beispielsweise ein Industrie-PC (PC = personal computer) oder eine SPS (speicherprogrammierbare Steuerung) sein.

Das Auswerten der gesamten verfügbaren Verpackungsprozessinformationen bzw. das Herunterladen der Auswertungsinformationen seitens einer der beteiligten Verpackungsanlangen kann dabei mehrere Ziele haben:
Beispielsweise kann die Nachhaltigkeit der Anlage erhöht werden. Dabei können die Staubbelastung bzw. der Staubausstoß einer jeden Maschine oder der gesamten Verpackungsanlage, oder beispielsweise der Energieverbrauch einer jeden Maschine oder der gesamten Verpackungsanlage untersucht werden.

Alternativ kann eine Leistungsoptimierung beabsichtigt sein. Dabei können beispielsweise die abgesackten Säcke pro Stunde bei der Absackvorrichtung, die palettierten Stückgutstapel pro Stunde beim Palettierer oder die mit Folie verpackten Stückgutstapel pro Stunde bei der Ladungssicherungsvorrichtung untersucht werden. Ferner besteht die Möglichkeit, eine Minimierung von Wartung und/oder Ausfallzeiten der Verpackungsanlagen durch defekte Bauteile zu erzielen. Beispielsweise durch Früherkennung eines drohenden Maschinenausfalls durch verändertes Maschinenverhalten beziehungsweise durch Optimierung der Voraussage der Lebensdauer von Bauteilen anhand der Einsatzbedingungen.

Darüber hinaus kann die Qualität der Produkte verbessert beziehungsweise eine konstante Produktqualität angestrebt werden. Beispielsweise durch Optimierung der Schweißparameter anhand von Auswertungen über Fehlsäcke.

Es ist vorgesehen, dass mittels der Auswertungsinformationen die jeweilige Verpackungsanlage und/oder Vorrichtung und/oder Komponente der Vorrichtung kalibrierbar, parametrisierbar, optimierbar und/oder der Zustand der Verpackungsanlage und/oder Vorrichtung und/oder ihrer Komponenten bestimmbar ist.

Dabei kann die Kalibration, Parametrisierung, Optimierung und/oder Zustandsschätzung und/oder Zustandsbewertung auf Basis der Informationen der jeweiligen Vorrichtung oder auf Basis der Informationen von vergleichbaren Vorrichtungen und Verpackungsanlagen an denselben oder anderen Standorten genutzt werden. Es kann vorgesehen sein, dass das Herunterladen der Auswertungsinformationen in zeitlichen Intervallen erfolgt, welche manuell oder automatisch getriggert werden können.

Es kann vorgesehen sein, dass das vorgebbare Kriterium ein verbessertes Produktionsergebnis hinsichtlich Leistung, beispielsweise Produkte je Zeit, hinsichtlich Verfügbarkeit, beispielsweise Aktionsbereitschaft je Zeit und/oder die Qualität, beispielsweise Produkte mit hoher Qualität je Zeit ist.

Die Verpackungsprozessinformationen umfassen Eingangsgrößen, Ist-Betriebsparameter sowie Ausgangsgrößen. Die Eingangsgrößen umfassen Informationen zum Verpackungsmaterial, weiterhin können sie Informationen zum Produkt und/oder zum Produktionsergebnis umfassen. Die Informationen zum Produkt können Informationen zur Produktart umfassen, wie beispielsweise Zement, Getreide, Gebinde oder Granulate. Die Informationen zum Verpackungsmaterial umfassen die Sackgröße, das Sackmaterial, die Ladungsträgergröße, das Ladungsträgermaterial, die Ladungsträgerart, beispielsweise mit oder ohne Palette, tray oder slip sheet, das Verpackungsmaterial, beispielsweise elastische Kunststofffolie oder Gewebe, und/oder die Größe des Verpackungsmaterials, wie beispielsweise die Abmessungen der Folienrollen, des Seitenfaltenschlauchs oder des Folienschlauchs, umfassen. Die Abmessungen können zwischen Ø 600-1000mm, und B=350-550mm betragen. Die Informationen zum Produktionsergebnis können beispielsweise das Gewicht und/oder die Abmessungen des gefüllten Sacks, des palettierten Stückgutstapels, des Lagenverbands und/oder des mit Folie umhüllten Stückgutstapels umfassen. Die Abmessungen des Stückgutstapels können beispielsweise Ø 600-1000mm, B=350-1200mm betragen.

Es ist vorgesehen, dass die Auswertungsinformationen Soll-Betriebsparameter umfassen, welche einen optimierten Betrieb der Verpackungsanlage ermöglichen. Alternativ oder zusätzlich umfassen die Auswertungsinformationen Sollwerte für die Eingangsgrößen und/oder die Ausgangsgrößen, welche einen optimierten Betrieb der Verpackungsanlage ermöglichen.

Als Ergebnis der Auswertung können auch Modifikationen an einer Vorrichtung vorgenommen werden, beispielsweise Austausch eines Reffbügels, Installation von Gleitbelägen im Palettierer, Eliminierung der scharfen Kanten eines Sacks oder Beutels, um Beschädigungen der Folie zu vermeiden.

Es ist vorgesehen, dass die Ist-Betriebsparameter das Entlüftungsvolumen, das Belüftungsvolumen, die Turbinendrehzahl und/oder die Grob- und Feinstromgewichte und/oder -zeiten der Absackvorrichtung; die Bandgeschwindigkeiten, die Verfahrweisen, die Taktzeiten für bestimmte Verbände und/oder die Presszeiten und Wege für die Lagen der Palettiervorrichtung; und/oder die Stretchparameter wie beispielsweise Positionen und/oder Geschwindigkeiten, die Reffparameter wie beispielsweise Wege, Geschwindigkeiten und/oder Positionen und/oder die Schweißparameter wie beispielsweise Zeit, Druck und/oder Kraft der Ladungssicherungsvorrichtung umfassen.

Ferner ist vorgesehen, dass die Ausgangsgrößen Warnmeldungen, Alarme, Fehlermeldungen, Wartungshinweise, den Staubausstoß einer jeden Vorrichtung oder der gesamten Verpackungsanlage, den Energieverbrauch, wie beispielsweise der Druckluft, den Stromverbrauch jeder Vorrichtung oder der gesamten Verpackungsanlage, den Folienverbrauch, die Maschinenleistung, wie beispielsweise abgesackte Säcke pro Stunde bei der Absackvorrichtung, palettierte Stückgutstapel pro Stunde beim Palettierer und/oder mit Folie verpackte Stückgutstapel pro Stunde bei der Ladungssicherungsvorrichtung, Maschinenausfallzeiten und/oder die Qualität, beispielsweise durch eine Optimierung der Schweißparameter anhand von Auswertungen über Fehlsäcke, umfassen.

Als Sensoren können Vibrationssensoren, Temperatursensoren, Akustiksensoren, bildgebende Sensoren, Positionssensoren, induktive Sensoren, kapazitive Sensoren und/oder Strommessgeräte vorgesehen sein.

Die Erfindung betrifft ferner ein Verfahren nach Anspruch 7 zum Betreiben eines Systems nach einem der Ansprüche 1-6.

Es kann vorgesehen sein, dass die Auswertungsinformationen anonymisiert sind, so dass unkenntlich gemacht ist, von welcher Verpackungsanlage diese hochgeladen wurden.

Es kann vorgesehen sein, dass der Zugriff seitens der Verpackungsanlagen auf die gemeinsame Speichereinrichtung das Hochladen sämtlicher Verpackungsprozessinformationen erlaubt, jedoch nur das Herunterladen der anonymisierten Auswertungsinformationen ermöglicht wird. Es kann vorgesehen sein, dass ein Betreiber eine Auswahl der Daten vornehmen kann, welche nicht an die gemeinsame Speichereinrichtung gesendet werden. Ferner ist denkbar, dass die Verpackungsprozessinformationen von der mindestens einen Steuereinrichtung an die Speichereinrichtung gesendet werden, die Steuereinrichtung jedoch kein Zugriffsrecht auf die in der Speichereinrichtung hinterlegten Auswertungsinformationen besitzt. Durch dieses Beschränken auf einen einseitigen Datenfluss kann ein Schutz vor Hackerangriffen gewährleistet werden.

Beispielsweise ist denkbar, dass über die Bedien- und Informationseinheit nur Verpackungsprozessinformationen angezeigt, gefiltert oder sortiert werden können. Dies schützt einen Betreiber vor Hackerangriffen, da nur ein einseitiger Datenfluss erfolgt, und zwar von der Steuereinrichtung zur Speichereinrichtung. In diesem Fall kann eine Abfrage vorgesehen sein, ob eine vorgeschlagene Änderung der Auswertungsinformation an die Steuereinrichtungen gesendet und damit in der Vorrichtung umgesetzt werden dürfen.

Es kann vorgesehen sein, dass das Erfassen und Speichern der Verpackungsprozessinformationen in der Speichereinrichtung kontinuierlich erfolgt.

Ferner kann das Zugreifen auf die in der Speichereinrichtung hinterlegten Auswertungsinformationen seitens zumindest einer der Verpackungsanlagen zur Inbetriebnahme oder zur Neujustierung in zeitlichen Intervallen erfolgen.

Das Zugreifen auf die in der Speichereinrichtung hinterlegten optimierten Soll-Betriebsparameter kann manuell oder automatisch getriggert sein.

Sowohl die die Steuereinrichtungen als auch die Bedien- und Informationseinheit können dazu eingerichtet sein, auf die Auswertungsinformationen zuzugreifen. Es kann vorgesehen sein, dass eine Abfrage über die Bedien- und Informationseinheit erfolgt, ob eine vorgeschlagene Änderung der Auswertungsinformation an die Steuereinrichtungen gesendet und damit umgesetzt werden dürfen. Die vorgeschlagene Änderung kann dann manuell von einem Maschinenbediener bestätigt werden.

Das Vergleichen der Verpackungsprozessinformationen kann das Zusammenfassen von Teilen der Verpackungsprozessinformationen zu Clustern umfassen. Beispielsweise können die Eingangsgrößen verglichen und Cluster gebildet werden. Beispielsweise für ein gleiches Sackformat, ein gleiches Material, einen gleichen Lagenverband, etc. Alternativ können die Ausgangsgrößen verglichen und Cluster gebildet werden. Beispielsweise für die Anzahl der abgesackten Säcke pro Stunde, die palettierten Stückgutstapel pro Stunde, etc. Weiterhin können alternativ die Verpackungsprozessinformationen nach den gewünschten Zielen geclustert werden. Beispielsweise nach einem wartungsarmen Betrieb, einer Mischung der Betriebseigenschaften (Leistung 50%, wartungsarmer Betrieb 30%, energieeffizienter Betrieb 20%), leistungsoptimierter Betrieb etc.). Es kann vorgesehen sein, dass der verwendete Algorithmus eine Empfehlung der Betriebsparameter für das vorgegebene Ziel bzw. das vorgebbare Kriterium / Optimierungskriterium ausgibt.

Der Algorithmus kann beispielsweise untersuchen, welche Achsen (Hubwerk, Stretchrahmen etc.) zu einem erhöhten Energieverbrauch führen. Ferner kann der Algorithmus untersuchen, welche Prozessschritte für einen energieeffizienten Betrieb eher langsam und welche schnell betrieben werden sollten. Ferner kann der Algorithmus das Auftreten von Maschinenausfällen untersuchen. Beispielsweise kann Betreiber A einen Maschinenausfall haben. Bei einem bestimmten Zählerstand können nun andere Betreiber mit ähnlichen Einstellungen frühzeitig gewarnt werden, eine Wartung zu machen und/oder ein Bauteil oder eine Baugruppe zu tauschen.

Ferner kann der Algorithmus Schweißnahtparameter für Foliencluster in Abhängigkeit der Fehlhauben untersuchen und davon ausgehend Schweißnahtparameter empfehlen, bei welchen die geringste Fehlquote erzeugt wird.

Es ist ferner denkbar, dass eine Clusterung der Verpackungsprozessinformationen anhand des abzufüllenden Materials vorgenommen wird.

Es ist demnach denkbar, dass das Optimierungskriterium ein verbessertes Produktionsergebnis hinsichtlich Leistung, beispielsweise Produkte je Zeit, hinsichtlich Verfügbarkeit, beispielsweise Aktionsbereitschaft je Zeit und/oder die Qualität, beispielsweise Produkte mit hoher Qualität je Zeit ist.

Es kann vorgesehen sein, dass entweder die Maschine die Empfehlung für eine Änderung der Betriebsparameter automatisch übernimmt oder eine Freigabe über einen Bediener eingefordert wird. Die Änderungen der Betriebsparameter können wiederum in die Cloud gesendet und dem gesamten Kundenetzwerk zur Verfügung gestellt werden.

Anstelle eines Algorithmus ist auch ein maschineller Lernalgorithmus / KI (künstliche Intelligenz) denkbar.

Die gemeinsame Speichereinrichtung kann eine Datenbank innerhalb oder außerhalb der Verpackungsanlage oder Vorrichtung sein, auf welcher die kontinuierlich anfallenden Informationen von Sensoren und Steuerungen der Vorrichtung, der Komponenten der Vorrichtung oder der gesamten Verpackungsanlage jeweils abgespeichert werden. Die Verpackungsprozessinformationen können jeweils mit dem Zeitpunkt der aufgenommenen Informationen sowie mit einem eindeutigen Identifikator der jeweiligen Vorrichtung, der Komponente einer Vorrichtung und/oder der Verpackungsanlage abgespeichert werden.

Weiterhin ist es denkbar, dass es nur einen Betreiber gibt, der jedoch an mehreren voneinander entfernten Standorten Maschine desselben Typs betreibt und deren Daten über die Cloud auf die oben beschriebene Weise austauscht und zur Optimierung / Anpassung der Betriebsparameter mindestens einer Maschine einsetzt werden. Dies ist für Fälle denkbar, in denen ein Betreiber sensible Daten nicht mit fremden Betreibern innerhalb eines Netzwerks teilen möchte. Es ermöglicht dem Betreiber schnell und einfach auf die Daten aller seiner Maschinen zugreifen und diese bei Bedarf anpassen / optimieren zu können.

Weiterhin ist es denkbar, dass ein Kunde keine eigenen Verpackungsprozessinformationen für das Kundennetzwerk zur Verfügung stellt. Der Kunde hat jedoch Einsicht auf die Verpackungsprozessinformationen anderer Kunden, die in der Speichereinrichtung gespeichert sind. Dadurch kann er Verpackungsprozessinformationen für ein spezielles Problem oder nach einem bestimmten Kriterium innerhalb des Kundennetzwerks anfragen. Als Antwort kann der Kunde optimierte Verpackungsprozessinformationen für seine Verpackungsanlage erhalten. Anstelle, dass der Kunde keine eigenen Verpackungsprozessinformationen zur Verfügung stellt, kann der Kunde auch nur die Verpackungsprozessinformationen für das Kundennetzwerk zur Verfügung stellen, die relevant für sein Problem oder seine Anfrage sind und als Antwort optimierte Verpackungsprozessinformationen erhalten.

Beispielhafte Ausführungsformen der Erfindung werden anhand der nachfolgenden Figuren erläutert. Dabei zeigt:
- Fig. 1: einen beispielhaften Aufbau einer Verpackungsanlage;
- Fig. 2: ein beispielhaftes Ablaufschema einer Auswertung von Verpackungsprozessinformationen zum Optimieren der Schweißnahtqualität;
- Fig. 3: ein beispielhaftes Ablaufschema einer maschinenübergreifenden Auswertung von Verpackungsprozessinformationen hinsichtlich der Fluidisierung von Material.
- Fig. 4: ein beispielhaftes Kundennetzwerk mit einer Verpackungsanlage eines Kunden A und einer Verpackungsanlage eines Kunden B.

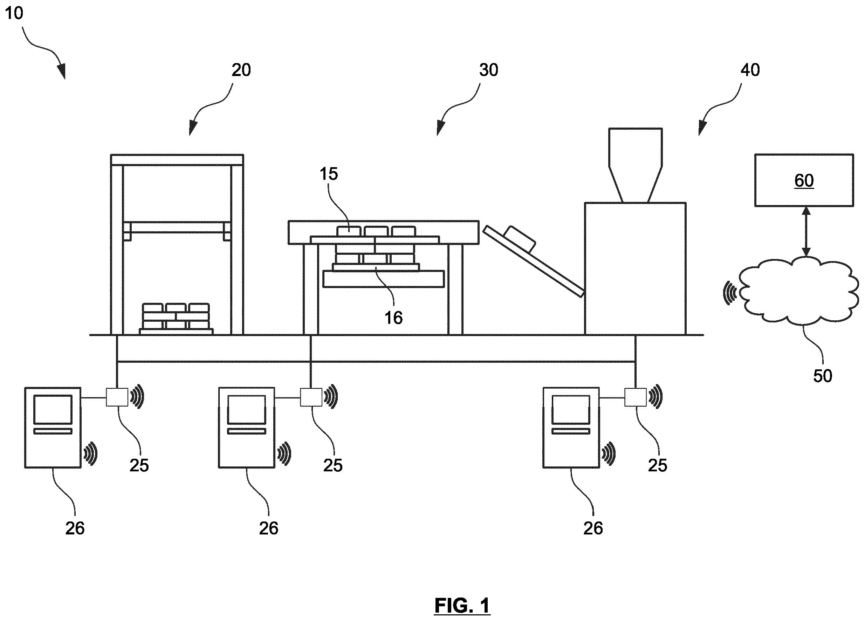

In Fig. 1 ist eine Ausführungsform einer Verpackungsanlage 10 gezeigt. Diese weist eine Absackvorrichtung 40 auf, an welcher ein schüttfähiges Produkt aus einem dafür vorgesehenen Silo in Säcke 15 abgesackt wird. Die Verpackungsanlage 10 weist ferner eine Palettiervorrichtung 30 auf, an welcher die befüllten Säcke 15 zu Lagen angeordnet und die Lagen auf einer Palette 16 zu einem Stückgutstapel gestapelt werden. Die Paletten werden anschließend an eine Ladungssicherungsvorrichtung 20 übergeben, an welcher die Stückgutstapel auf Paletten mit einem Folienüberzug versehen werden, so dass die Säcke 15 auf der Palette 16 fixiert sind. Die Absackvorrichtung 40, die Palettiervorrichtung 30 und die Ladungssicherungsvorrichtung 20 bilden somit eine Verpackungslinie. Jede der Vorrichtungen weist eine separate Steuereinrichtung 25 sowie eine damit verbundene Bedien- und Informationseinheit 26 auf, welche jeweils mit Sensoren der jeweiligen Vorrichtung verbunden sind und kontinuierlich Verpackungsprozessinformationen erfassen, beziehungsweise können Verpackungsprozessinformationen über die Bedien- und Informationseinheit 26 eingegeben, verwaltet und/oder eingesehen werden. Die Steuereinrichtungen 25 und die Bedien- und Informationseinheiten 26 sind zur drahtlosen oder drahtgebundenen Kommunikation mit der zugehörigen Vorrichtung sowie mit der Speichereinrichtung 50 eingerichtet und übersenden die gesammelten Verpackungsprozessinformationen an die gemeinsame Speichereinrichtung 50, in welcher die Informationen gespeichert werden. Die Steuereinrichtung kann die gesammelten Verpackungsprozessinformationen direkt oder indirekt an die Speichereinrichtung 50 übersenden. Indirekt kann bedeuten, dass die Steuereinrichtung die gesammelten Verpackungsprozessinformationen zunächst an einen Leitrechner außerhalb oder innerhalb der Vorrichtung übersendet. Dieser Leitrechner kann dann die Verpackungsprozessinformationen an die Speichereinrichtung übergeben.

Die Steuereinrichtung 25 kann beispielsweise ein Industrie-PC (PC = personal computer) oder eine SPS (speicherprogrammierbare Steuerung) sein.

Die gemeinsame Speichereinrichtung 50 bezieht weitere Verpackungsprozessinformationen aus weiteren (nicht dargestellten) Verpackungsanlagen 10. Eine mit der Speichereinrichtung 50 verbundene Auswerteeinheit 60 vergleicht die gesammelten Verpackungsprozessinformationen der verschiedenen Verpackungsanlagen 10 und vergleicht gezielt mindestens einen ausgewählten Parameter mithilfe eines Algorithmus oder einer entsprechend konfigurierten KI. "Gezielt" bedeutet nach einem vom Bediener oder von der KI selbst vorgebbaren Kriterium. Beispielsweise erfolgt ein Vergleich von Eingangsgrößen, bei dem beispielsweise ein gleiches Sackformat, ein gleiches Material, ein gleicher Verband etc. zu Clustern zusammengefasst werden. Beispielsweise kann auch ein Vergleich von Ausgangsgrößen erfolgen, bei welchem beispielsweise ein sehr wartungsarmer Betrieb oder ein sehr energieeffizienter Betrieb zu Clustern zusammengefasst werden. Die Auswerteeinheit 60 stellt diese Auswertungsinformationen anschließend den beteiligten Verpackungsanlagen zum Herunterladen aus der gemeinsamen Speichereinrichtung 50 zur Verfügung. Dabei kann beispielsweise eine Empfehlung von Maschinenparametern für einen nach bestimmten Kriterien optimierten Betrieb erfolgen, beispielsweise wartungsarm oder eine Mischung der Betriebseigenschaften Performance 50%, wartungsarmer Betrieb 30%, energieeffizienter Betrieb 20%.

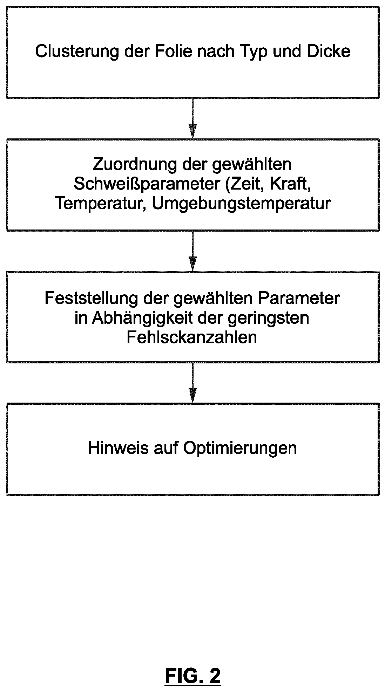

Fig. 2 zeigt einen beispielhaften Ablauf einer in der Auswerteeinheit 50 erfolgenden Datenauswertung der Verpackungsprozessinformationen, hier mit dem Ziel einer Optimierung der Schweißnahtqualität als vorgebbares Kriterium. Zunächst erfolgt dabei eine Clusterung der Folie nach Typ und Dicke. Den ausgewählten Foliendicken und -typen werden anschließend die jeweils gewählten Schweißparameter wie Zeit, Kraft, Temperatur und Umgebungstemperatur zugeordnet. Dann erfolgt eine Auswertung, welche der gewählten Parameter zu den geringsten Fehlsackanzahlen führen. Die Auswertungsinformationen werden anschließend in der gemeinsamen Speichereinrichtung 50 hinterlegt und liefern so Hinweise auf Optimierungen für die beteiligten Verpackungsanlagen 10.

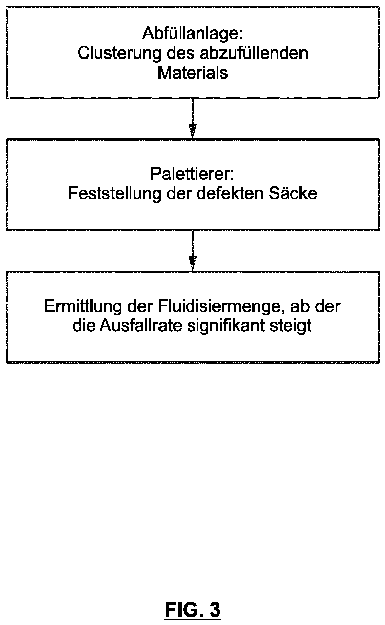

Fig. 3 zeigt ein beispielhaftes Ablaufschema einer maschinenübergreifenden Auswertung von Verpackungsprozessinformationen hinsichtlich der Fluidisierung von Material als vorgebbarem Kriterium. An der Abfüllanlage erfolgt dabei zunächst eine Clusterung der Verpackungsprozessinformationen hinsichtlich der abgefüllten Materialien. Am Palettierer wird die Anzahl der defekten Säcke festgestellt und für die verschiedenen Materialien aufgeschlüsselt. Anschließend wird die Fluidisiermenge ermittelt, ab welcher die Ausfallrate signifikant steigt.

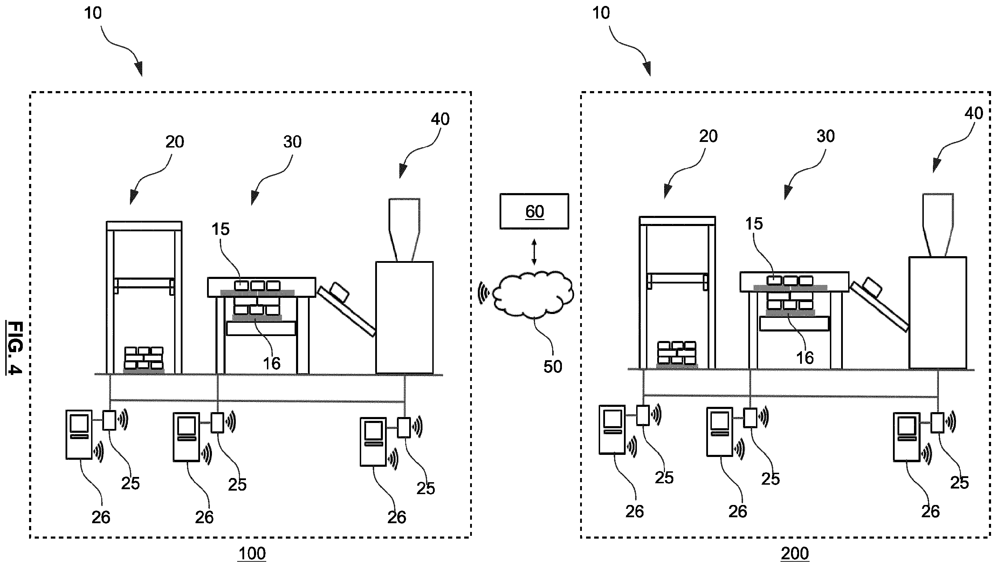

Fig. 4 zeigt ein beispielhaftes Kundennetzwerk mit zwei Verpackungsanlagen 10. Jede Verpackungsanlage 10 ist einem Kunden 100, 200 zugeordnet. Jede Verpackungsanlage 10 stellt dem Kundennetzwerk seine jeweiligen Verpackungsprozessinformationen zur Verfügung. Die Verpackungsanlagen 10 sind in der gezeigten Ausführungsform dazu jeweils drahtlos mit einer gemeinsamen Speichereinrichtung 50 verbunden. Die übermittelten Daten werden in einer gemeinsamen, der Speichereinrichtung zugeordneten Auswerteeinheit 60 ausgewertet.

### Bezugszeichenliste

- 10: Verpackungsanlage
- 15: Sack
- 16: Palette
- 20: Ladungssicherungsvorrichtung
- 25: Steuereinrichtung
- 26: Bedien- und Informationseinheit
- 30: Palettiervorrichtung
- 40: Absackvorrichtung
- 50: gemeinsame Speichereinrichtung
- 60: Auswerteeinheit
- 100: Kunde A
- 200: Kunde B

## Patentansprüche

1. System umfassend zumindest zwei Verpackungsanlagen (10) zum Verpacken von schüttfähigen Produkten in Säcke (15) oder Beutel, wobei jede Verpackungsanlage (10) zumindest eine Absackvorrichtung (40), eine Palettiervorrichtung (30) und eine zur Sicherung der auf einer Palette gestapelten Säcke mittels eines Kunststofffolienüberzugs oder einer Stretchfolie eingerichtete Ladungssicherungsvorrichtung (20) aufweist, wobei jede der Verpackungsanlagen (10) mindestens eine Steuereinrichtung (25) und einen mit dieser verbundenen Sensor und mindestens eine Bedien-und Informationseinheit (26) aufweist, wobei das System derart eingerichtet ist, dass aktuelle Verpackungsprozessinformationen der jeweiligen Verpackungsanlage (10) bzw. der zumindest einen darin vorhandenen Vorrichtung mittels des Sensors erfasst und mittels der Bedien- und Informationseinheit (26) eingegeben werden,
wobei die mittels der Bedien- und Informationseinheit (26) eingegebenen Verpackungsprozessinformationen Eingangsgrößen umfassen, die Informationen zum Verpackungsmaterial umfassen,
wobei die Informationen zum Verpackungsmaterial eine Sackgröße, ein Sackmaterial, eine Ladungsträgergröße, ein Ladungsträgermaterial, eine Ladungsträgerart, beispielsweise mit oder ohne Palette, ein Verpackungsmaterial, beispielsweise elastische Kunststofffolie oder Gewebe, und/oder eine Größe des Verpackungsmaterials, wie beispielsweise die Abmessungen von Folienrollen, eines Seitenfaltenschlauchs oder eines Folienschlauchs, umfassen,
wobei die mittels des Sensors erfassten Verpackungsprozessinformationen Ist-Betriebsparameter sowie Ausgangsgrößen umfassen,
wobei die Ist-Betriebsparameter ein Entlüftungsvolumen, ein Belüftungsvolumen, eine Turbinendrehzahl, Grob- und Feinstromgewichte und/oder -zeiten der Absackvorrichtung, Bandgeschwindigkeiten, Verfahrweisen, Taktzeiten für bestimmte Verbände, Presszeiten und Wege für die Lagen der Palettiervorrichtung, Stretchparameter wie beispielsweise Positionen und/oder Geschwindigkeiten, Reffparameter wie beispielsweise Wege, Geschwindigkeiten und/oder Positionen und/oder Schweißparameter wie beispielsweise Zeit, Druck und/oder Kraft der Ladungssicherungsvorrichtung umfassen,
wobei die Ausgangsgrößen Warnmeldungen, Alarme, Fehlermeldungen, Wartungshinweise, einen Staubausstoß einer jeden Vorrichtung oder der gesamten Verpackungsanlage, einen Energieverbrauch, wie beispielsweise der Druckluft, einen Stromverbrauch jeder Vorrichtung oder der gesamten Verpackungsanlage, einen Folienverbrauch, eine Maschinenleistung, wie beispielsweise abgesackte Säcke pro Stunde bei der Absackvorrichtung, palettierte Stückgutstapel pro Stunde beim Palettierer und/ oder mit Folie verpackte Stückgutstapel pro Stunde bei der Ladungssicherungsvorrichtung, Maschinenausfallzeiten und/oder eine Qualität umfassen,
wobei die zumindest zwei Verpackungsanlagen (10) mit einer gemeinsamen Speichereinrichtung (50) verbunden oder verbindbar sind, um darin die erfassten Verpackungsprozessinformationen abzuspeichern;
wobei die gemeinsame Speichereinrichtung (50) mit einer Auswerteeinheit (60) verbunden ist, welche dazu eingerichtet ist, die in der Speichereinrichtung (50) hinterlegten Verpackungsprozessinformationen miteinander zu vergleichen, wobei der Vergleich nach einem vom Bediener oder einer KI vorgegebenen Kriterium erfolgt, und anhand vorgebbarer Kriterien auszuwerten und dadurch generierte Auswertungsinformationen, nämlich Soll-Betriebsparameter oder Sollwerte für die Eingangsgrößen und/oder die Ausgangsgrößen, welche einen optimierten Betrieb der Verpackungsanlage ermöglichen, in der Speichereinrichtung (50) zu hinterlegen,
wobei die Steuereinrichtungen (25) der zumindest zwei Verpackungsanlagen (10) jeweils dazu eingerichtet sind, auf die Auswertungsinformationen zuzugreifen,
wobei das System derart eingerichtet ist, dass mittels der Auswertungsinformationen die jeweilige Verpackungsanlage und/oder die zumindest eine darin vorhandene Vorrichtung kalibriert, parametriert, optimiert und/oder der Zustand der Verpackungsanlage und/oder Vorrichtung bestimmt wird.

2. System nach Anspruch 1, wobei das vorgebbare Kriterium ein verbessertes Produktionsergebnis hinsichtlich Leistung, beispielsweise Produkte je Zeit, hinsichtlich Verfügbarkeit, beispielsweise Aktionsbereitschaft je Zeit und/oder die Qualität, beispielsweise Produkte mit hoher Qualität je Zeit ist.

3. System nach Anspruch 1, wobei die Eingangsgrößen Informationen zum Produkt und/oder zum Produktionsergebnis umfassen.

4. System nach Anspruch 3, wobei die Informationen zum Produkt Informationen zur Produktart umfassen, wie beispielsweise Zement, Getreide, Gebinde oder Granulate.

5. System nach einem der Ansprüche 1, 3 oder 4, wobei die Informationen zum Produktionsergebnis beispielsweise das Gewicht und/oder die Abmessungen des gefüllten Sacks, des palettierten Stückgutstapels, des Lagenverbands und/oder des mit Folie umhüllten Stückgutstapels umfassen.

6. System nach einem der vorangehenden Ansprüche, wobei die Sensoren Vibrationssensoren, Temperatursensoren, Akustiksensoren, bildgebende Sensoren, und/oder Strommessgeräte umfassen.

7. Verfahren zum Betreiben eines Systems nach einem der Ansprüche 1 bis 6.

8. Verfahren nach Anspruch 7, bei welchem das Erfassen und Speichern der Verpackungsprozessinformationen in der Speichereinrichtung (50) kontinuierlich erfolgt.

9. Verfahren nach Anspruch 7 oder 8, bei dem das Zugreifen auf die in der Speichereinrichtung (50) hinterlegten Auswertungsinformationen seitens zumindest einer der Verpackungsanlagen (10) zur Inbetriebnahme oder zur Neujustierung in zeitlichen Intervallen erfolgt.

10. Verfahren nach einem der Ansprüche 7 bis 9, bei dem das Zugreifen auf die in der Speichereinrichtung (50) interlegten optimierten Soll-Betriebsparameter manuell oder automatisch getriggert wird.

11. Verfahren nach einem der Ansprüche 7bis 10, bei dem die Verpackungsprozessinformationen von der mindestens einen Steuereinrichtung (25) an die Speichereinrichtung (50) gesendet werden, die Steuereinrichtung jedoch kein Zugriffsrecht auf die in der Speichereinrichtung hinterlegten Auswertungsinformationen besitzt.

## Claims

1. System comprising at least two packaging installations (10) for packaging pourable products in bags (15) or pouches, wherein each packaging installation (10) comprises at least one bagging device (40), a palletizing device (30) and a load securing device (20) designed to secure, by means of a plastics film covering or a stretch film, the bags stacked on a pallet,
wherein each of the packaging installations (10) comprises at least one control device (25), a sensor connected thereto and at least one operating and information unit (26), wherein the system is configured such that current packaging process information of the relevant packaging installation (10) or of the at least one device present therein is captured by means of the sensor and input by means of the operating and information unit (26),
wherein the packaging process information input by means of the operating and information unit (26) includes input variables which comprise information about the packaging material,
wherein the information about the packaging material includes a bag size, a bag material, a load carrier size, a load carrier material, a load carrier type, for example with or without a pallet, a packaging material, for example elastic plastics film or fabric, and/or a size of the packaging material, such as the dimensions of film rolls, a side-gusseted tube or a film tube,
wherein the packaging process information captured by the sensor includes actual operating parameters and output variables,
wherein the actual operating parameters include a venting volume, a ventilation volume, a turbine speed, coarse and fine flow weights and/or flow times of the bagging device, belt speeds, travel modes, cycle times for certain assemblies, pressing times and paths for the layers of the palletizing device, stretching parameters such as positions and/or speeds, gathering parameters such as paths, speeds and/or positions and/or sealing parameters such as time, pressure and/or force of the load securing device,
wherein the output variables include warning messages, alarms, error messages, maintenance instructions, dust emissions of each device or of the entire packaging installation, energy consumption, such as of the compressed air, power consumption of each device or of the entire packaging installation, film consumption, machine performance, such as bags bagged per hour in the case of the bagging device, palletized piece goods stacks per hour in the case of the palletizer and/or film-packaged piece goods stacks per hour in the case of the load securing device, machine downtimes and/or quality,
wherein the at least two packaging installations (10) are or can be connected to a common storage device (50) in order to store the captured packaging process information therein;
wherein the common storage device (50) is connected to an evaluation unit (60) which is configured to compare the pieces of packaging process information stored in the storage device (50) with one another, wherein the comparison is carried out according to a criterion specified by the operator or an Al, and to evaluate said information on the basis of specifiable criteria and to store in the storage device (50) evaluation information generated thereby, namely target operating parameters or target values for the input variables and/or the output variables, which information enables optimized operation of the packaging installation,
wherein the control devices (25) of the at least two packaging installations (10) are each configured to access the evaluation information,
wherein the system is configured such that, by means of the evaluation information, the relevant packaging installation and/or the at least one device present therein is calibrated, parameterized, optimized and/or the state of the packaging installation and/or device is determined.

2. System according to claim 1, wherein the specifiable criterion is an improved production result in terms of performance, for example products per time, in terms of availability, for example readiness for action per time and/or in terms of the quality, for example products which have high quality per time.

3. System according to claim 1, wherein the input variables include information about the product and/or the production result.

4. System according to claim 3, wherein the information about the product includes information about the product type, such as cement, grain, bundles, or granules.

5. System according to any of claims 1, 3 or 4, wherein the information about the production result includes, for example, the weight and/or dimensions of the filled bag, of the palletized piece goods stack, of the layered assembly and/or of the piece goods stack wrapped in film.

6. System according to any of the preceding claims, wherein the sensors comprise vibration sensors, temperature sensors, acoustic sensors, imaging sensors, and/or current measuring apparatuses.

7. Method for operating a system according to any of claims 1 to 6.

8. Method according to claim 7, in which the capture and storage of the packaging process information in the storage device (50) takes place continuously.

9. Method according to claim 7 or claim 8, in which access to the evaluation information stored in the storage device (50) by at least one of the packaging installations (10) for activation or readjustment takes place in time intervals.

10. Method according to any of claims 7 to 9, in which access to the optimized target operating parameters stored in the memory device (50) is triggered manually or automatically.

11. Method according to any of claims 7 to 10, in which the packaging process information is sent from the at least one control device (25) to the storage device (50), but the control device has no right of access to the evaluation information stored in the storage device.

## Revendications

1. Système comprenant au moins deux installations d'emballage (10) pour l'emballage de produits en vrac dans des sacs (15) ou des sachets, dans lequel chaque installation d'emballage (10) présente au moins un dispositif d'ensachage (40), un dispositif de palettisation (30) et un dispositif de sécurisation de charge (20) conçu pour sécuriser les sacs empilés sur une palette au moyen d'un revêtement en film plastique ou d'un film étirable,
dans lequel chacune des installations d'emballage (10) présente au moins un appareil de commande (25) et un capteur connecté à celui-ci et au moins une unité de commande et d'information (26), dans lequel le système est configuré de telle sorte que des informations de processus d'emballage actuelles de l'installation d'emballage (10) respective ou de l'au moins un dispositif présent dans celle-ci sont détectées au moyen du capteur et entrées au moyen de l'unité de commande et d'information (26),
dans lequel les informations de processus d'emballage entrées au moyen de l'unité de commande et d'information (26) comprennent des grandeurs d'entrée qui comprennent des informations concernant le matériau d'emballage,
dans lequel les informations concernant le matériau d'emballage comprennent une taille de sac, un matériau de sac, une taille de support de charge, un matériau de support de charge, un type de support de charge, par exemple avec ou sans palette, un matériau d'emballage, par exemple un film plastique élastique ou un tissu, et/ou une taille du matériau d'emballage, comme par exemple les dimensions de rouleaux de film, d'un tube à soufflet ou d'un tube de film,
dans lequel les informations de processus d'emballage détectées au moyen du capteur comprennent des paramètres de fonctionnement réels ainsi que des grandeurs de sortie,
dans lequel les paramètres de fonctionnement réels comprennent un volume de purge, un volume d'aération, une vitesse de rotation de turbine, des poids et/ou des temps de flux grossier et fin du dispositif d'ensachage, des vitesses de bande, des modes de déplacement, des temps de cycle pour certains ensembles, des temps de compression et des trajets pour les couches du dispositif de palettisation, des paramètres d'étirage comme par exemple des positions et/ou des vitesses, des paramètres de houssage comme par exemple des trajets, des vitesses et/ou des positions, et/ou des paramètres de soudage comme par exemple le temps, la pression et/ou la force du dispositif de sécurisation de charge,
dans lequel les grandeurs de sortie comprennent des messages d'avertissement, des alarmes, des messages d'erreur, des instructions de maintenance, une émission de poussière de chaque dispositif ou de l'ensemble de l'installation d'emballage, une consommation d'énergie, comme par exemple l'air comprimé, une consommation d'électricité de chaque dispositif ou de l'ensemble de l'installation d'emballage, une consommation de film, une performance de machine, comme par exemple des sacs ensachés par heure dans le dispositif d'ensachage, des empilements de marchandises de détail palettisées par heure dans le dispositif de palettisation et/ou des empilements de marchandises de détail emballées avec un film par heure dans le dispositif de sécurisation de charge, des temps d'arrêt de machine et/ou une qualité,
dans lequel les au moins deux installations d'emballage (10) sont connectées ou peuvent être connectées à un appareil de stockage (50) commun afin d'y stocker les informations de processus d'emballage détectées ;
dans lequel l'appareil de stockage (50) commun est connecté à une unité d'évaluation (60) qui est configurée pour comparer entre elles les informations de processus d'emballage enregistrées dans l'appareil de stockage (50), dans lequel la comparaison est effectuée selon un critère prédéfini par l'opérateur ou par une IA, et pour les évaluer à l'aide de critères pouvant être prédéfinis et pour enregistrer dans l'appareil de stockage (50) des informations d'évaluation ainsi générées, à savoir des paramètres de fonctionnement de consigne ou des valeurs de consigne pour les grandeurs d'entrée et/ou les grandeurs de sortie, lesquels paramètres ou valeurs permettent un fonctionnement optimisé de l'installation d'emballage,
dans lequel les appareils de commande (25) des au moins deux installations d'emballage (10) sont respectivement configurés pour accéder aux informations d'évaluation,
dans lequel le système est configuré de telle sorte qu'au moyen des informations d'évaluation, l'installation d'emballage respective et/ou l'au moins un dispositif présent dans celle-ci sont calibrés, paramétrés, optimisés et/ou l'état de l'installation d'emballage et/ou du dispositif est déterminé.

2. Système selon la revendication 1, dans lequel le critère pouvant être prédéfini est un résultat de production amélioré en termes de performance, par exemple de produits par temps, en termes de disponibilité, par exemple de disponibilité d'action par temps, et/ou en termes de qualité, par exemple de produits de haute qualité par temps.

3. Système selon la revendication 1, dans lequel les grandeurs d'entrée comprennent des informations concernant le produit et/ou concernant le résultat de production.

4. Système selon la revendication 3, dans lequel les informations concernant le produit comprennent des informations concernant le type de produit, comme par exemple du ciment, des céréales, des récipients ou des granulés.

5. Système selon l'une des revendications 1, 3 ou 4, dans lequel les informations concernant le résultat de production comprennent par exemple le poids et/ou les dimensions du sac rempli, de l'empilement de marchandises de détail palettisées, de l'ensemble de couches et/ou de l'empilement de marchandises de détail enveloppées d'un film.

6. Système selon l'une des revendications précédentes, dans lequel les capteurs comprennent des capteurs de vibration, des capteurs de température, des capteurs acoustiques, des capteurs d'imagerie, et/ou des ampèremètres.

7. Procédé permettant de faire fonctionner un système selon l'une des revendications 1 à 6.

8. Procédé selon la revendication 7, dans lequel la détection et le stockage des informations de processus d'emballage dans l'appareil de stockage (50) sont effectués en continu.

9. Procédé selon la revendication 7 ou 8, dans lequel l'accès aux informations d'évaluation enregistrées dans l'appareil de stockage (50) par au moins l'une des installations d'emballage (10) pour la mise en service ou le réajustement est effectué à des intervalles de temps.

10. Procédé selon l'une des revendications 7 à 9, dans lequel l'accès aux paramètres de fonctionnement de consigne optimisés enregistrés dans l'appareil de stockage (50) est déclenché manuellement ou automatiquement.

11. Procédé selon l'une des revendications 7 à 10, dans lequel les informations de processus d'emballage sont envoyées par l'au moins un appareil de commande (25) à l'appareil de stockage (50), mais l'appareil de commande ne possède pas de droit d'accès aux informations d'évaluation enregistrées dans l'appareil de stockage.
